Europäisches Patentamt

**European Patent Office**

**Office européen des brevets**

(11) Numéro de publication: **0 038 269**
A1

# (12) DEMANDE DE BREVET EUROPEEN

(21) Numéro de dépôt: **81400598.9**

(51) Int. Cl.³: **B 23 B 31/10**

(22) Date de dépôt: **14.04.81**

(30) Priorité: **14.04.80 FR 8008284**

(43) Date de publication de la demande: **21.10.81**
**Bulletin 81/42**

(84) Etats contractants désignés: **AT BE CH DE FR GB IT LI
LU NL SE**

(71) Demandeur: **LA PRECISION INDUSTRIELLE, 23, avenue
de la République, F-92505 Ruell Malmaison
Hauts-de-Seine (FR)**

(72) Inventeur: **Gamet, Louis Jean-Marie, 26, rue Ivan
Tourgueneff, F-78380 Bougival (FR)**

(74) Mandataire: **de Boisse, Louis et al, 37, Avenue Franklin
D. Roosevelt, F-75008 Paris (FR)**

(54) **Mandrin de serrage pour machines-outils.**

(57)    Chaque mors de ce mandrin comporte une pièce de
serrage (3), fixée de façon amovible sur une pièce de support (2), coulissante dans une glissière radiale. Selon l'invention, sur l'une des pièces (2 ou 3) une came 7 est montée
pivotante entre une position de serrage irréversible de l'autre pièce (3 ou 2) du mors; des moyens sont prévus pour
faire pivoter la came (7) de l'extérieur du mandrin.

    L'invention est applicable notamment aux machines-
outils dont les mors du mandrin doivent pouvoir être
échangés très rapidement, par exemple par des moyens
automatisés.

0038269

1

<u>Mandrin de serrage pour machines-outils</u>

La présente invention concerne un mandrin de serrage
pour machines-outils.

On connaît depuis longtemps des mandrins de serrage pour
machines-outils, dont chaque mors comporte une pièce
de support, montée coulissante dans une glissière radiale du mandrin, et une pièce de serrage, fixée de façon
amovible à la pièce de support (en fait, cette dernière
est généralement appelée "porte-mors", le terme de "mors"
étant réservé à la pièce de serrage, mais il y a lieu
de renoncer à cette terminologie usuelle, qui compliquerait indûment la description de la présente invention,
et spécialement l'énoncé des revendications).

Dans ces mandrins de serrage, de type connu, la pièce
de serrage de chaque mors est généralement fixée à la
pièce de support correspondante à l'aide de boulons,
traversant ladite pièce de serrage. L'opération d'échange des mors d'un tel mandrin, qui doit intervenir fréquemment lorsque la machine-outil munie de ce mandrin
doit servir successivement à usiner des pièces de configurations différentes, dont les unes doivent être serrées extérieurement par les mors, tandis que d'autres
doivent l'être par leur alésage intérieur, nécessite
donc, pour chaque mors, les manoeuvres successives suivantes : desserrage des boulons, extraction de ceux-ci hors des perçages de la pièce de serrage, enlèvement de la pièce de serrage, mise en place de la nouvelle pièce de serrage, de manière que ses perçages coïncident avec les perçages taraudés, correspondants, de la pièce de support, nouvel engagement des boulons dans les perçages correspondants de la pièce de serrage, et enfin serrage des boulons. On conçoit que cette succession de manoeuvres nécessite, si elles sont effectuées manuellement, une durée qui, multipliée par le nombre de mors du mandrin de serrage - trois le plus souvent - peut atteindre facilement et même dépasser plusieurs minutes. La complexité des manoeuvres à effectuer les rend d'autre part impossibles à automatiser, par exemple par le recours à un robot; ce dernier devrait en effet être en mesure d'utiliser un outil de serrage de boulons, tel qu'une clef; ceci n'est certes pas impossible; mais surtout, il devrait être en mesure d'aligner les perçages de chaque pièce de serrage avec les trous taraudés de la pièce de support correspondante, en vue de l'engagement des boulons, ce qui n'est pas à la portée des robots industriels usuels. Enfin, même en admettant qu'il soit possible de réaliser un robot suffisamment perfectionné pour effectuer automatiquement toutes les manoeuvres de changement de mors, il est peu vraisemblable qu'il y parvienne en une durée très inférieure à celle nécessaire à la réalisation manuelle de cette opération. Or, une durée de plusieurs minutes pour échanger l'ensemble des mors est généralement considérée comme excessive sur une ligne de fabrication automatique.

La présente invention a pour objet principal de permettre la réalisation d'un mandrin de serrage pour machine-outil, du type indiqué précédemment, autorisant une réduction très importante du temps nécessaire pour une opération de changement des mors.

Le mandrin de serrage pour machines-outils selon la
présente invention est du type indiqué précédemment,
et il est caractérisé en ce que, sur l'une des deux
pièces de chaque mors, une came irréversible est montée
pivotante entre une position de serrage irréversible
de l'autre pièce du mors, et une position de déverrouillage, et que des moyens sont prévus pour faire pivoter ladite came de l'extérieur du mandrin.

L'échange des mors du mandrin de serrage selon la présente invention nécessite donc, pour chaque mors, la
succession des manoeuvres suivantes : faire pivoter la
came associée au mors de sa position de serrage à sa
position de déverrouillage, par une rotation d'un angle
inférieur à 180 degrés dans un sens déterminé; séparer
la pièce de serrage de la pièce de support correspondante; appliquer la nouvelle pièce de serrage sur la pièce
de support; faire pivoter la came irréversible de sa
position de déverrouillage à sa position de serrage ,
d'un angle inférieur à 180 degrés, dans le sens opposé.
Si ces manoeuvres sont effectuées manuellement, elles
nécessitent, pour chaque mors, une durée notablement
inférieure à la minute. Par ailleurs, il s'agit de manoeuvres aisément automatisables, notamment en utilisant
un robot relativement simple, c'est-à-dire dont des performances élevées ne sont pas requises, notamment pour
la mise en place des nouvelles pièces de serrage. En
fait, l'ensemble des trois mors d'un mandrin de serrage
selon la présente invention peut être aisément échangé
en une durée inférieure ou égale à 30 secondes, en utilisant un robot industriel d'un type courant. Une telle
rapidité de l'échange des mors autorise l'emploi du mandrin de serrage selon la présente invention sur des
machines-outils faisant partie de lignes de fabrication
entièrement automatisées.

Dans une forme de réalisation préférée du mandrin de serrage pour machine-outil selon la présente invention, les deux pièces de chaque mors sont appliquées respectivement l'une sur l'autre par deux surfaces transversales à l'axe du mandrin; cette forme de réalisation est caractérisée en ce que la surface d'application de l'une des deux pièces de chaque mors comporte une partie saillante, qui s'étend dans la direction axiale du mandrin, et qui est engagée dans un évidement de forme complémentaire, s'ouvrant dans la surface d'application de l'autre pièce du mors, et que la came irréversible est montée dans l'une ou l'autre pièce du mors de manière que, en position de serrage de ladite came, sa partie active coopère avec une surface de serrage, aménagée sur ladite partie saillante ou dans ledit évidement.

Cette forme de réalisation de l'invention est particulièrement avantageuse, dans la mesure où elle permet de séparer la pièce de serrage de chaque mors, de la pièce de support correspondante, après avoir amené la came irréversible en position de déverrouillage, par un mouvement simple, de direction sensiblement axiale, ayant pour effet de dégager la partie saillante de l'une des deux pièces du mors, de l'évidement complémentaire de son autre pièce; bien entendu, la mise en place de la nouvelle pièce de serrage nécessite seulement un mouvement, pratiquement axial, de sens contraire. De tels mouvements, pratiquement axiaux, pour l'enlèvement de la pièce de serrage, et la mise en place d'une nouvelle pièce de serrage, sont évidemment à la portée de robots industriels de conception très simple, qui sont susceptibles de les effectuer à de grandes vitesses.

A titre d'exemples, on a décrit ci-dessous et illustré schématiquement au dessin annexé trois formes de réalisation du mandrin de serrage pour machine-outil selon la présente invention.

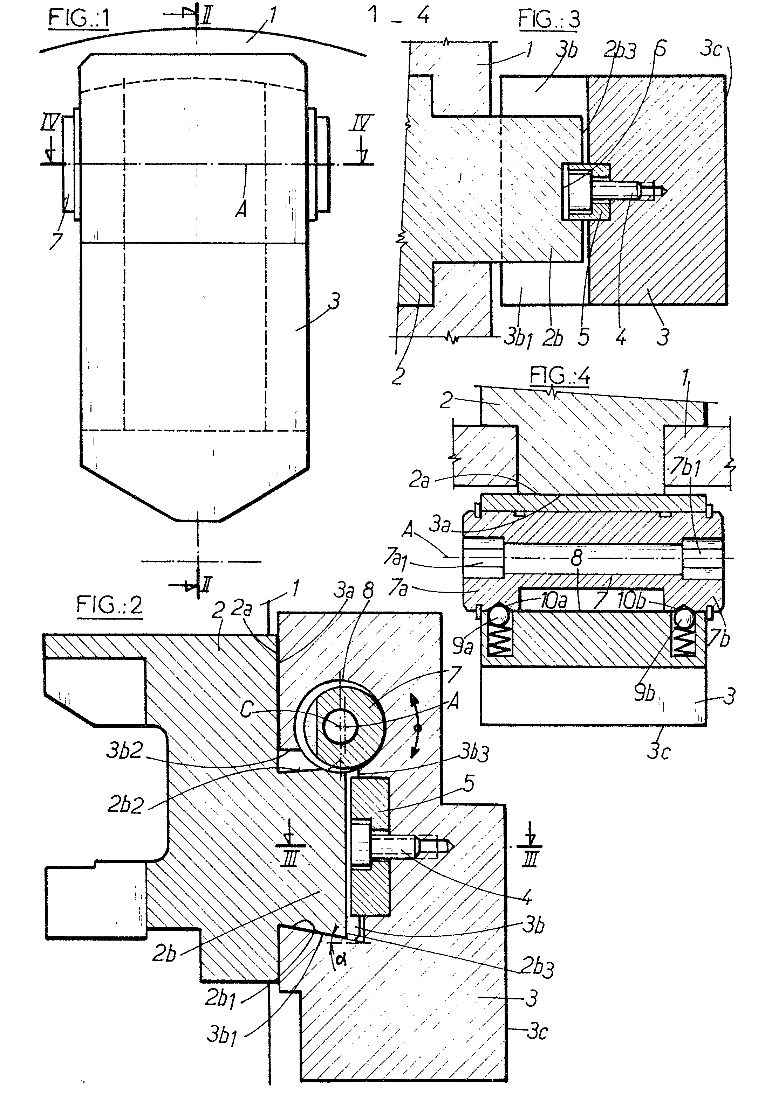

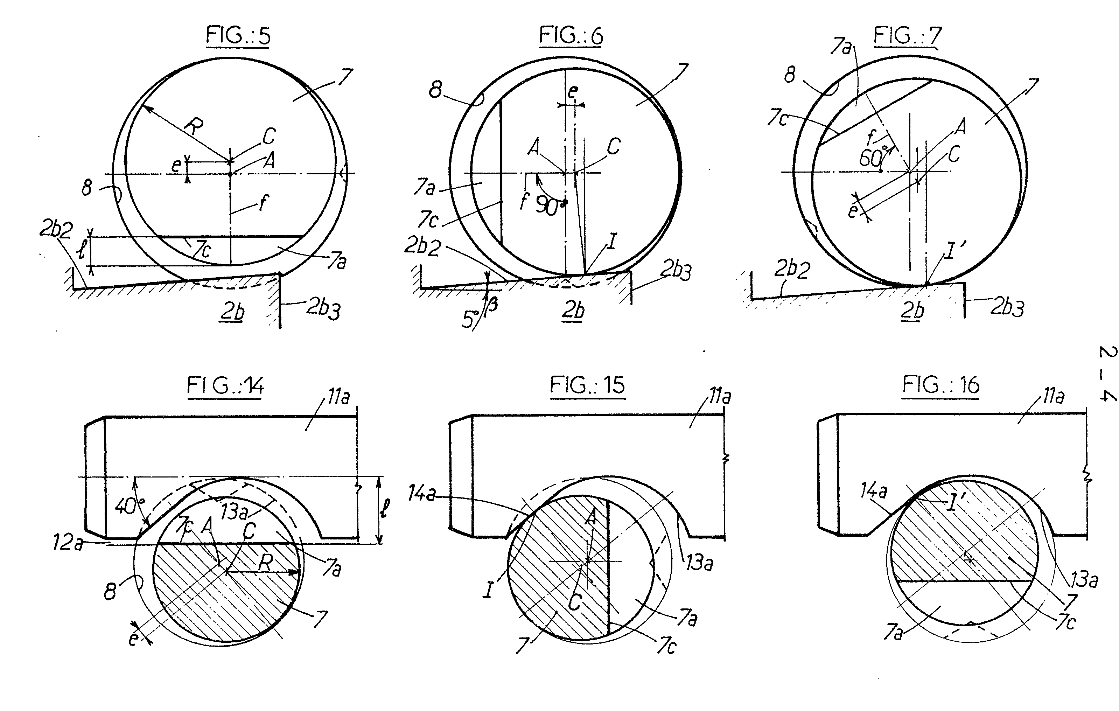

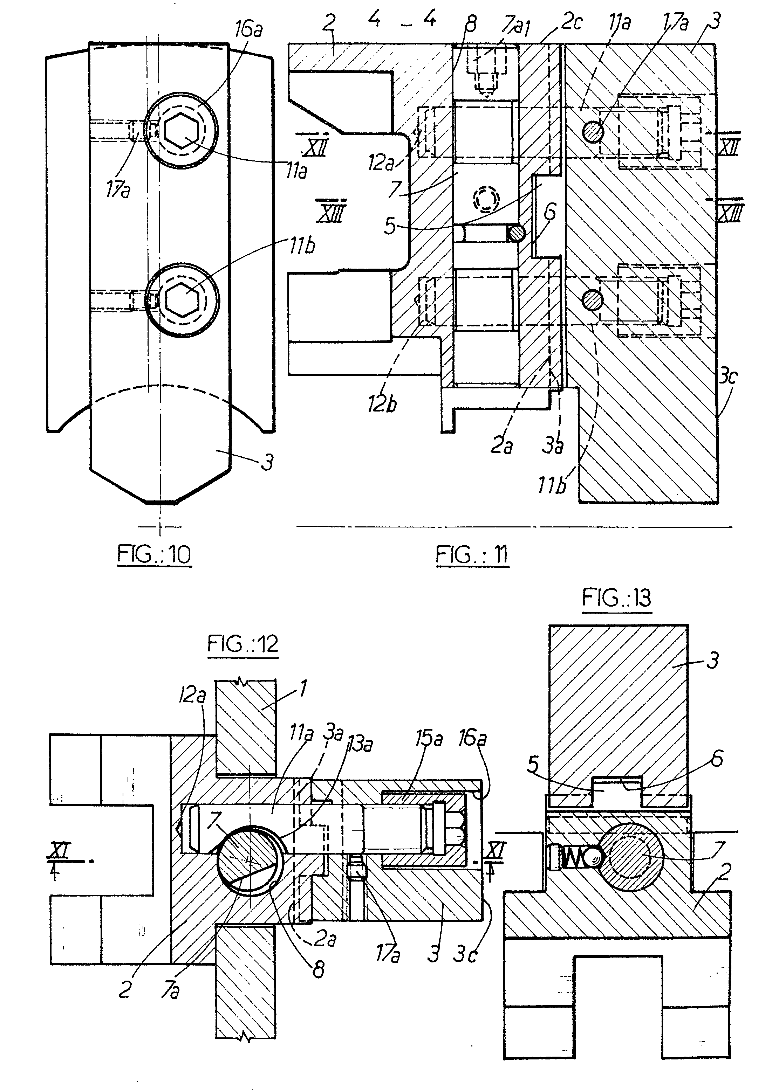

La figure 1 est une vue de face d'un mors de la première forme de réalisation; les figures 2 et 4 sont des vues en coupe suivant les lignes II-II et IV-IV de la figure 1; la figure 3 est une vue partielle en coupe suivant la ligne III-III de la figure 2; les figures 5 à 7 illustrent, en coupe transversale à son axe, trois positions angulaires différentes de la came irréversible dont est pourvue la forme de réalisation illustrée sur les figures 1 à 4; les figures 8 et 9 sont des vues en coupe de la seconde forme de réalisation, correspondant respectivement aux figures 2 et 4; la figure 10 est une vue de face d'un mors de la troisième forme de réalisation; la figure 11 est une vue en coupe suivant la ligne XI-XI de la figure 12; les figures 12 et 13 sont des vues en coupe suivant les lignes XII-XII et XIII-XIII de la figure 11; les figures 14 à 16 sont des vues analogues aux figures 5 à 7, correspondant à la réalisation des figures 10 à 13.

Sur les figures 1 à 4, représentant schématiquement la première forme de réalisation, 1 désigne le plateau d'un mandrin de serrage pour machine-outil, dans lequel sont aménagées par exemple trois glissières radiales, à 120 degrés les unes des autres, dans chacune desquelles est montée librement coulissante une pièce de support 2 (ou "porte-mors"); les déplacements synchrones des trois pièces de support telles que 2, dans leurs glissières radiales respectives, sont commandés, généralement à l'aide d'un vérin hydraulique, par l'intermédiaire d'une transmission mécanique, dont il existe différentes formes de réalisation connues, qu'il n'est donc pas nécessaire de décrire en détail. A chaque pièce de support telle que 2 est fixée de façon amovible une pièce de serrage, 3, qui constitue le mors proprement dit. Dans la forme de réalisation considérée, les deux pièces, 2 et 3, de chaque mors sont appliquées respectivement l'une sur l'autre par deux surfaces, 2a et 3a, perpendiculaires à l'axe du mandrin (qui est horizontal sur les figures 1 et 2). D'autre part, la surface d'application de l'une des deux pièces de chaque mors, notamment la surface d'application 2a de la pièce de support 2, comporte une partie saillante formée par au moins un tenon, 2b, qui s'étend dans la direction axiale du mandrin (horizontalement sur la figure 2). Ce tenon 2b, présente au moins une première surface, $2b_1$, de direction tangentielle (c'est-à-dire perpendiculaire au plan de la figure 2), et il est engagé dans un évidement de forme complémentaire, s'ouvrant dans la surface d'application, 3a, de l'autre pièce du mors, c'est-à-dire de sa pièce de serrage 3. En l'occurrence, il s'agit d'une mortaise, 3b, qui présente une première surface, $3b_1$, de même direction tangentielle que la surface $2b_1$ du tenon 2b, sur laquelle elle est appliquée, comme visible à la figure 2. Dans la surface radiale qui constitue le fond, $3b_3$, de la mortaise 3b, est fixée, par une vis 4, une pièce 5, formant une nervure de guidage, qui est engagée partiellement dans une rainure 6, de forme complémentaire, aménagée elle-même dans la surface terminale, $2b_3$, du tenon 2b de la pièce de support 2; l'ensemble assure le guidage radial de la pièce de serrage 3 par rapport à la pièce de support 2. Dans cette forme de réalisation, une came irréversible, 7, est montée dans la pièce de serrage 3 du mors près de la surface, $3b_2$, de sa mortaise 3b, qui est opposée à sa première surface tangentielle $3b_1$, et de même direction tangentielle qu'elle (c'est-à-dire perpendiculaire au plan de la figure 2). La came irréversible 7 est un excentrique de forme cylindrique, monté pivotant autour d'un axe A de direction tangentielle (c'est-à-dire perpendiculaire au plan de la figure 2). Le logement de la came cylindrique 7 est un perçage cylindrique, 8, qui traverse de part en part la pièce de support 3, comme visible sur la vue en coupe de la figure 4, et qui présente un diamètre supérieur à celui de l'excentrique cylindrique 7; l'axe C du logement cylindrique 8 est parallèle à l'axe de pivotement A de l'excentrique 7, et tous deux le sont à une seconde surface, $2b_2$, du tenon 2b, de même direction tangentielle que sa première surface $2b_1$ (c'est-à-dire perpendiculaire au plan de la figure 2). Le logement cylindrique 8 s'ouvre d'autre part, dans la mortaise 3b, en regard de ladite seconde surface tangentielle, $2b_2$, du tenon 2b. Comme visible sur la vue en coupe de la figure 4, l'axe de l'excentrique cylindrique, 7, est matérialisé par deux pivots cylindriques, 7a et 7b, montés de façon à pouvoir tourner librement dans les extrémités du logement cylindrique 8, et des évidements prismatiques, $7a_1$ et $7b_1$, sont aménagés dans les faces extrêmes des pivots 7a et 7b de façon à permettre d'y engager une clef de serrage d'un type approprié. Des billes, 9a, 9b, sont engagées dans des trous borgnes débouchant dans la paroi latérale du logement cylindrique 8, en regard des pivots 7a et 7b; des ressorts tendent à pousser ces billes 9a, 9b, dans des billages 10a, 10b, pratiqués respectivement dans les pivots 7a, 7b, dans des positions angulaires correspondant à la position de déverrouillage de la came 7.

Sur la figure 2, on voit que les premières surfaces tangentielles, $2b_1$, du tenon 2b, et $3b_1$, de la mortaise 3b, qui sont appliquées l'une sur l'autre, sont inclinées sur l'axe du mandrin (de direction horizontale sur la figure 2), dans la direction de la face frontale 3c du mors, ou de sa pièce de serrage 3, d'un angle α, par exemple d'au moins 15 degrés. La seconde surface tangentielle, $2b_2$, du tenon 2b est également inclinée sur l'axe du mandrin, mais dans la direction inverse, d'un angle β, par exemple de l'ordre de 5 degrés (figure 6).

Sur les figures 2 et 5 à 7, on voit clairement qu'un segment de l'excentrique cylindrique 7 a été supprimé sur une largeur $\underline{1}$; comme visible sur la figure 5, il s'agit du segment dont les flèches $\underline{f}$ passent d'abord par l'axe de pivotement A de l'excentrique 7, puis par l'axe géométrique C dudit excentrique. Sur la figure 5, l'excentrique 7 a été représenté dans sa position angulaire correspondant au déverrouillage de la pièce de serrage 3 du mors considéré; dans cette position, la surface plane 7c, correspondant au segment supprimé de l'excentrique cylindrique, est parallèle à l'axe du mandrin, c'est-à-dire horizontale. La largeur $\underline{1}$ du segment supprimé doit être évidemment adaptée aux pentes des surfaces tangentielles $2b_1$ et $2b_2$ ainsi qu'à l'étendue axiale du tenon 2b pour permettre la séparation de la pièce de serrage 3 de la pièce de support 2 par un mouvement sensiblement axial, vers la droite de la figure 2, ce mouvement s'accompagnant nécessairement d'un léger déplacement radial de la pièce de serrage 3, dû à l'inclinaison $\alpha$ des surfaces tangentielles $2b_1$ et $3b_1$, déplacement radial qui est autorisé, au niveau de la surface tangentielle $2b_2$, par le plat 7c aménagé sur l'excentrique 7.

La figure 6 montre la came 7 dans la position angulaire qui lui a été donnée en la faisant tourner de 90 degrés dans le sens des aiguilles d'une montre à partir de sa position de déverrouillage (figure 5), par exemple à l'aide d'une clef introduite dans le trou borgne prismatique $7a_1$ (figure 4). Le pourtour de l'excentrique cylindrique 7 est alors venu en contact avec la surface tangentielle $2b_2$ du tenon 2b le long d'une génératrice I, parallèle aux axes A et C.

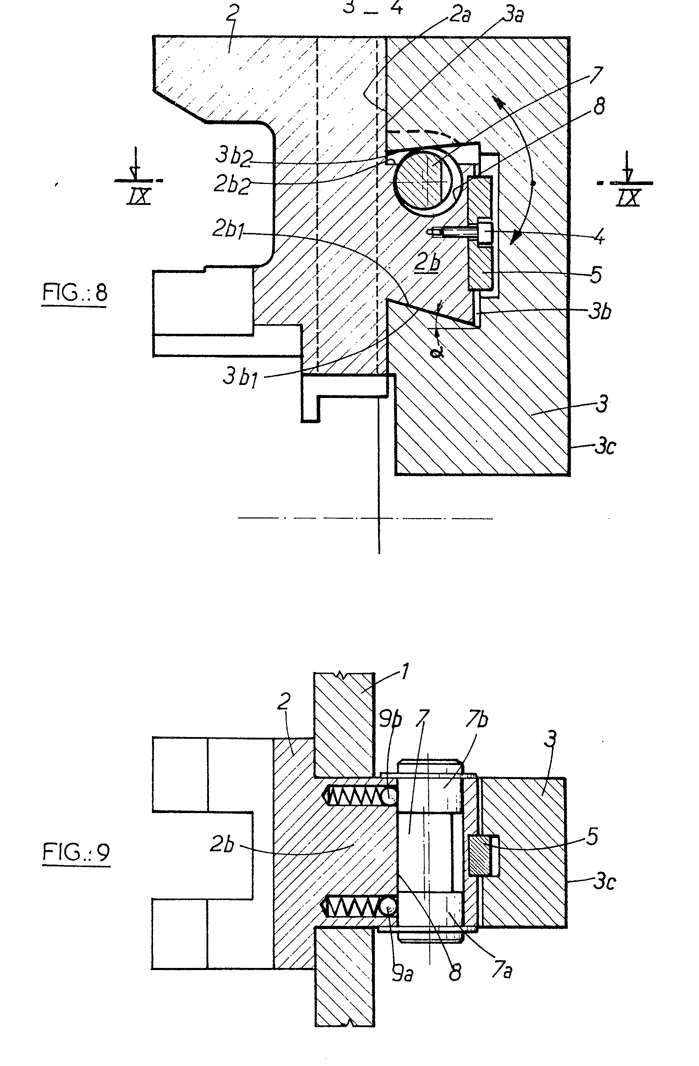

La figure 7 correspond à la position angulaire de la came 7 après une nouvelle rotation de 60 degrés dans le sens des aiguilles d'une montre; le pourtour de l'excentrique cylindrique est encore en contact avec la surface tangentielle $2b_2$ du tenon suivant une génératrice I', au niveau de laquelle ladite came 7 exerce un serrage maximum sur le tenon 2b. Un serrage suffisant peut être obtenu pour une position angulaire de la came 7, intermédiaire entre celles représentées sur les figures 6 et 7; de préférence, on dimensionne l'ensemble, en fonction notamment de l'inclinaison $\beta$ de la surface tangentielle $2b_2$ du tenon 2b, de la position de l'axe de pivotement A, du rayon R de l'excentrique cylindrique 7, ainsi que de son excentrement $\underline{e}$, de façon à obtenir un serrage irréversible du tenon 2b, par la came 7, pour une position angulaire de ladite came plus proche de sa position de serrage initial de la figure 6, que de sa position de serrage maximal de la figure 7; en effet, on peut alors compenser l'usure éventuelle des surfaces coopérantes de la came 7 et du tenon 2b, en vue de maintenir le degré de serrage, celà en faisant pivoter la came 7 jusqu'à une position angulaire de plus en plus proche de sa position limite de la figure 7. Grâce à l'irréversibilité du serrage obtenu, chaque mors du mandrin selon la présente invention résiste efficacement aux composantes axiales des forces auxquelles sa pièce de serrage 3 est soumise, le desserrage de la came, et la séparation entre la pièce de serrage 3 et la pièce de support 2 pouvant seulement être obtenus en faisant pivoter ladite came 7 dans le sens inverse des aiguilles d'une montre, jusqu'à sa position de déverrouillage de la figure 5, à l'aide d'une clef introduite dans le logement prismatique $7a_1$ par exemple. L'effet des composantes axiales mentionnées, tendant à séparer la pièce de serrage 3 de la pièce de support 2, est également compensé par l'inclinaison appropriée, $\alpha$, des surfaces tangentielles $2b_1$ et $3b_1$, en contact l'une avec l'autre.

Pour le serrage manuel de la came irréversible 7, on peut utiliser une clef ordinaire. Dans le cas par contre

où ce serrage doit être effectué par un robot, il faudra prévoir l'utilisation, par ce dernier, d'une clef dynamométrique, ou actionnée par un moteur hydraulique, de façon à obtenir toujours un serrage approprié.

Dans la variante illustrée sur les figures 8 et 9, la came irréversible 7 est montée dans le tenon 2b de la pièce de support, 2, du mors, près de sa surface, $2b_2$, opposée à sa première surface tangentielle, $2b_1$, de façon à venir serrer une seconde surface, $3b_2$, de la mortaise 3b de la pièce de serrage 3, opposée à sa première surface $3b_1$, et de même direction tangentielle qu'elle (perpendiculaire au plan de la figure 8).

Les formes de réalisation illustrées sur les figures 1 à 9 et précédemment décrites sont également susceptibles d'autres variantes, entrant toutes dans le cadre de l'invention. Les premières et/ou les secondes surfaces tangentielles du tenon et de la mortaise, au lieu d'être inclinées sur l'axe du mandrin, pourraient lui être parallèles. Au lieu d'être aménagée dans la pièce de serrage 3, la mortaise pourrait être aménagée dans la pièce de support 2, le tenon faisant alors saillie sur la surface d'application de ladite pièce de serrage 3. Dans ce cas, la came irréversible pourrait être montée dans la pièce de support 2, ou éventuellement dans le tenon de la pièce de serrage 3.

Dans la forme de réalisation illustrée sur les figures 10 à 13, deux ergots cylindriques, 11a, 11b, forment des saillies axiales sur la surface d'application 3a de la pièce de serrage 3; les deux goujons cylindriques, 11a, 11b, sont engagés avec un faible jeu dans des évidements, également cylindriques, 12a et 12b, de la pièce de support 2. La came irréversible 7 est montée dans un logement 8 qui s'étend radialement depuis la surface extérieure périphérique, 2c, de la pièce de support 2, en passant à proximité des deux évidements cylindriques 12a et 12b, au niveau desquels ledit logement 8 est ouvert en regard respectivement des deux ergots, 11a et 11b, qui y sont engagés, comme visible sur la figure 12. Chacun des goujons, 11a et 11b, comporte une entaille telle que 13a (figures 12 et 14 à 16), où s'engage la partie active de la came 7, au moins lorsqu'elle est en position de serrage (cas illustré sur les figures 12, 15 et 16). Dans la forme de réalisation considérée, la came irréversible 7 est un excentrique de forme cylindrique, sur lequel un plat 7a est aménagé en supprimant un segment dudit excentrique, au moins au niveau de chacun des goujons, 11a et 11b, sur une largeur $\underline{1}$ (figure 14), adaptée pour permettre la sortie desdits goujons 11a, 11b, hors des évidements correspondants, 12a, 12b, dans la position de déverrouillage de la came 7 qui est illustrée sur la figure 14. Pour le reste, la came irréversible 7 peut être réalisée comme illustré sur la figure 4, précédemment décrite, à cela près qu'un trou borgne prismatique unique, $7a_1$, est aménagé dans son extrémité la plus proche de la surface périphérique 2c de la pièce de support 2.

Sur la figure 14, la came 7 est représentée dans sa position angulaire correspondant à sa position de déverrouillage; son plat, 7c, est alors sensiblement tangent à la surface du logement cylindrique 12a, de telle sorte que le goujon 11a peut en être extrait par un déplacement dans le sens de l'axe dudit évidement cylindrique, c'est-à-dire dans la direction de l'axe du mandrin, en même temps, bien entendu, que l'autre goujon, 11b.

La figure 15 montre la position atteinte par l'excentrique cylindrique 7 après une rotation d'un angle approprié dans le sens des aiguilles d'une montre, qui amène l'une des génératrices, I, de sa surface périphérique en contact avec une surface plane, 14a, de l'entaille 13a du goujon 11a; dans l'exemple de réalisation considéré, cette
surface plane 14a fait un angle de l'ordre de 40 degrés
avec l'axe du goujon.

Sur la figure 16, une nouvelle rotation de la came 7
dans le sens des aiguilles d'une montre a amené sa génératrice de contact I' à proximité de la zone de raccordement entre la surface plane 14a et le reste de
l'entaille 13a, ladite came 7 exerçant alors un serrage
maximal sur le goujon 11a. Comme on l'a indiqué précédemment à propos des figures 5 à 7, l'ensemble est dimensionné de manière que la came 7 assure un serrage
irréversible des goujons 11a et 11b dans une position
angulaire plus proche de celle représentée sur la figure 15 que de celle correspondant au serrage maximal,
et représentée sur la figure 16. Ceci permet de rattraper le jeu éventuel dû à l'usure des pièces en contact,
en conservant l'intensité du serrage.

Sur la figure 12, on voit que l'extrémité de chacun des
goujons, tel que 11a, la plus proche de la face frontale 3c de la pièce de serrage 3 est vissée dans un écrou
15a, pouvant tourner librement dans un évidement 16a,
pratiqué dans ladite face frontale 3c; en introduisant
une clef dans l'embouchure extérieure prismatique de
l'écrou 15a, on peut faire tourner ce dernier de manière
à ajuster la position axiale du goujon correspondant
11a et par suite les conditions de serrage de ce dernier
par la came 7. La position angulaire du goujon 15a, et
par suite de son entaille 13a-14a, est alors assurée
par une vis radiale 17a. L'ensemble formé par chaque
goujon 11a et l'écrou 15a correspondant peut aussi être
remplacé par un boulon à tête lisse.

La forme de réalisation illustrée sur les figures 10 à 13 est susceptible de nombreuses variantes, entrant toutes dans le cadre de l'invention. Le nombre de goujons est matière à option. Au lieu de faire saillie sur la surface d'application de la pièce de serrage 3, les goujons tels que 11a et 11b peuvent faire saillie sur la surface d'application de la pièce de support 2, et pénétrer dans des évidements correspondants de la pièce de serrage 3. La forme de l'entaille de chaque goujon, et notamment sa surface plane 14a, est matière à option. Il est également possible d'aménager un plat sur la surface latérale de chaque goujon, et de disposer la came de telle façon que sa partie active vienne coopérer avec ce plat en position de serrage. Des moyens de guidage radial, tels qu'une nervure 5 et une rainure 6 de formes complémentaires, peuvent être prévues respectivement sur les surfaces d'application des deux pièces de chaque mors. Au lieu d'être un excentrique de forme cylindrique, la came irréversible peut avoir une autre forme appropriée; dans le cas de la réalisation à deux goujons, illustrée sur les figures 10 à 16, on peut utiliser un arbre à deux cames. Au lieu de s'étendre au moins jusqu'à l'une des surfaces extérieures de la partie correspondante du mors, le logement de la came peut déboucher à l'extérieur de ladite partie du mors, par un orifice livrant passage ou accès à une extrémité de l'axe de la came ou bien à un prolongement latéral de ladite came ou dudit axe, pour en permettre la rotation, à la main ou de préférence à l'aide d'un outil de serrage. Enfin, dans la mesure où la résultante des forces appliquées à la pièce de serrage 3 de chaque mors est transmise directement à la came 7 et à la pièce 2 par les goujons 11a, 11b, il est possible de réaliser seulement ces pièces en acier, l'autre pièce, 3, du mors pouvant par contre être réalisée en métal ou en alliage léger; ceci réduit considérablement la force centrifuge qui est appliquée à chaque mors; comme ladite force centrifuge

14

0038269

s'ajoute à ou se retranche de la force de serrage du mors, on réduit ainsi les risques d'endommagement de la pièce serrée dans le mandrin, notamment aux vitesses élevées de rotation dudit mandrin.

1

0038269

Revendications de brevet

1.   Mandrin de serrage pour machines-outils, dont chaque mors comporte une pièce de support (2) montée coulissante dans une glissière radiale du mandrin, et une pièce de serrage (3), fixée de façon amovible à la pièce de support (2),**mandrin** caractérisé en ce que, sur l'une des deux pièces (2 ou 3) de chaque mors, une came irréversible (7) est montée pivotante entre une position de serrage irréversible de l'autre pièce (3 ou 2) du mors, et une position de déverrouillage, et que des moyens ($7a_1$) sont prévus pour faire pivoter la dite came (7) de l'extérieur du mandrin.

2.   Mandrin selon la revendication 1, dont les deux pièces (2, 3) de chaque mors sont appliquées respectivement l'une sur l'autre par deux surfaces (2a, 3a) transversales à l'axe du mandrin, caractérisé en ce que la surface d'application (2a ou 3a) de l'une des deux pièces (2 ou 3) de chaque mors comporte une partie saillante (2b), qui s'étend dans la direction axiale du mandrin, et qui est engagée dans un évidement (3b) de forme complémentaire, s'ouvrant dans la surface d'application (3a ou 2a) de l'autre pièce (3 ou 2) du mors, et que la came irréversible (7) est montée dans l'une ou l'autre pièce (2 ou 3) du mors de manière que, en position de serrage de ladite came (7), sa partie active coopère avec une surface de serrage ($2b_2$ ou $3b_2$), aménagée sur ladite partie saillante (2b) ou dans ledit évidement (3b).

3.   Mandrin selon la revendication 2, caractérisé en ce que la partie en saillie sur la surface d'application (2a) de l'une des deux pièces (2 ou 3) de chaque mors est formée par au moins un tenon (2b), qui présente au moins une première surface ($2b_1$) de direction tangentiel-

le, et qui est engagé dans une mortaise (3b) s'ouvrant dans la surface d'application (3a) de l'autre pièce (3 ou 2) du mors, et présentant au moins une première surface (3b$_1$) de même direction tangentielle que celle (2b$_1$) dudit tenon (2b), sur laquelle elle est appliquée.

4.  Mandrin selon la revendication 3, caractérisé en ce que la came irréversible (7) est montée dans l'autre pièce (3 ou 2) du mors, près de la surface (3b$_2$) de sa mortaise (3b), opposée à sa première surface tangentielle (3b$_1$), de façon à venir serrer une seconde surface (2b$_2$) du tenon (2b), opposée à sa première surface (2b$_1$) et de même direction tangentielle qu'elle.

5.  Mandrin selon la revendication 3, caractérisé en ce que la came irréversible (7) est montée dans le tenon (2b) de l'une des pièces (2 ou 3) du mors, près de sa surface (2b$_2$) opposée à sa première surface tangentielle (2b$_1$), de façon à venir serrer une seconde surface (3b$_2$) de la mortaise (3b) de l'autre pièce (3 ou 2), opposée à sa première surface (3b$_1$), et de même direction tangentielle qu'elle.

6.  Mandrin selon l'une quelconque des revendications 3 à 5, caractérisé en ce que la mortaise (3b) est aménagée dans la pièce de serrage (3) de chaque mors, et que les surfaces tangentielles sont inclinées sur l'axe du mandrin, les premières (2b$_1$, 3b$_1$) dans la direction de la face frontale (3c) du mors, d'un angle ($\alpha$) par exemple d'au moins 15 degrés, la seconde surface tangentielle (2b$_2$ ou 3b$_2$), de serrage, étant inclinée dans la direction inverse, d'un angle ($\beta$), par exemple de l'ordre de 5 degrés.

7.  Mandrin selon l'une quelconque des revendications 1 à 6, caractérisé en ce que le logement (8) de la came (7) débouche à l'extérieur de la partie correspondante (2 ou 3) du mors, par un orifice livrant passage ou accès à une extrémité de la came (7) ou de son axe (7a ou 7b), ou bien à un prolongement latéral de ladite came ou dudit axe, pour en permettre la rotation, à la main ou, de préférence, à l'aide d'un outil de serrage.

8.    Mandrin selon l'une quelconque des revendications 4 à 7, caractérisé en ce que la came irréversible (7) est un excentrique de forme cylindrique, monté pivotant autour d'un axe de direction tangentielle (A) parallèle à la seconde surface tangentielle ($2b_2$ ou $3b_2$), de serrage, dans un logement (8) ouvert en regard de ladite seconde surface tangentielle ($2b_2$ ou $3b_2$).

9.    Mandrin selon la revendication 8, caractérisé en ce que le segment (7c) de l'excentrique cylindrique (7) dont les flèches passent d'abord par l'axe de pivotement (A) puis par l'axe géométrique (C) dudit excentrique (7) est supprimé sur une largeur (l) adaptée aux pentes (α, β) des surfaces tangentielles ($2b_1$, $3b_1$, $2b_2$ ou $3b_2$) et à l'étendue axiale du tenon (2b), de façon à permettre la séparation des deux pièces (2 et 3) du mors en position de déverrouillage de la came (7).

10.    Mandrin selon l'une quelconque des revendications 2 à 9, caractérisé en ce que des moyens de guidage radial, tels qu'une nervure (5) et une rainure (6) de formes complémentaires, sont prévus respectivement sur les deux pièces (2 et 3) de chaque mors, par exemple sur les surfaces radiales ($3b_3$ et $2b_3$), situées l'une en regard de l'autre, du fond de la mortaise (3b) et de la surface terminale du tenon (2b).

11.    Mandrin selon la revendication 2, caractérisé en ce que la partie en saillie sur la surface d'application de l'une des deux pièces (2 ou 3) de chaque mors est formée par au moins un, et de préférence deux goujons (11a, 11b), par exemple cylindriques, qui sont engagés, avec un faible jeu, dans des évidements (12a, 12b) de l'autre pièce (3 ou 2) du mors, et que la came irréversible (7) est montée dans ladite autre pièce (3 ou 2) du mors, dans un logement (8) qui s'étend radialement depuis la surface extérieure périphérique (2c) de ladite autre pièce (3 ou 2) en passant à proximité de ses deux évidements (12a, 12b), au niveau desquels ledit logement (8) est ouvert en regard respectivement des deux goujons (11a, 11b) qui y sont engagés.

12. Mandrin selon la revendication 11, caractérisé en ce que chaque goujon (11a, 11b) comporte une entaille (13a, 13b), où s'engage la partie active de la came (7), au moins lorsqu'elle est en position de serrage.

13. Mandrin selon la revendication 12, caractérisé en ce que l'entaille (13a ou 13b) de chaque goujon (11a ou 11b) comporte une surface plane (14a ou 14b) de serrage, faisant un angle approprié avec l'axe du goujon (11a ou 11b), par exemple de l'ordre de 40 degrés.

14. Mandrin selon l'une quelconque des revendications 12 et 13, caractérisé en ce que la came irréversible est un excentrique de forme cylindrique (7), et qu'un segment (7c) de cet excentrique (7) est supprimé, au moins au niveau de chaque goujon (11a ou 11b), sur une largeur (1) adaptée pour permettre la sortie des goujons (11a, 11b) hors des évidements correspondants (12a, 12b), en position de déverrouillage de la came.

15. Mandrin selon l'une quelconque des revendications 8, 9 et 14, caractérisé en ce que le logement (8) de la came cylindrique (7) est également de forme cylindrique, et de diamètre supérieur, et que l'axe (C) de la came est matérialisé par deux pivots (7a, 7b) tournant librement dans les extrémités dudit logement cylindrique (8), dont l'une au moins est ouverte pour livrer passage ou accès à un moyen de rotation du pivot correspondant de la came (7).

16. Mandrin selon la revendication 15, caractérisé en ce que des moyens, tels qu'au moins un billage (10a ou 10b) pratiqué dans l'un au moins des pivots (7a, 7b) de la came (7) et une bille (9a ou 9b) poussée par un ressort, sont prévus pour repérer l'une au moins des positions angulaires de la came (7), de préférence sa position de déverrouillage.

0038269

FIG.:1

FIG.:3

FIG.:4

FIG.:2

FIG:7

FIG:6

FIG:5

FIG:16

FIG:15

FIG:14

0038269

FIG.: 8

FIG.: 9

0038269

FIG.:10

FIG.: 11

FIG.:12

FIG.:13

## DOCUMENTS CONSIDERES COMME PERTINENTS

| Catégorie | Citation du document avec indication, en cas de besoin, des parties pertinentes | Revendication concernée |
|---|---|---|
| X | US - A - 2 667 358 (HIGHBERG)<br><br>* Colonne 1, lignes 46-55; colonne 2; colonne 3, lignes 1-2; figures 1-4 *<br><br>-- | 1,10-15 |
| A | GB - A - 182 492 (BECK) | |
| A | US - A - 3 744 808 (HUGHES) | |
| A | US - A - 3 219 356 (WILTERDINK) | |
| A | US - A - 2 569 056 (HIGHBERG)<br><br>---- | |

**CLASSEMENT DE LA DEMANDE (Int. Cl.³)**

B 23 B 31/10

**DOMAINES TECHNIQUES RECHERCHES (Int. Cl.³)**

B 23 B 31/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 24-07-1981 | BOGAERT |

OEB Form 1503.1 06.78